# EUROPÄISCHE PATENTANMELDUNG

(11) **EP 0 727 855 A1**
(43) Veröffentlichungstag der Anmeldung: **21.08.1996**
(21) Anmeldenummer: 96101947.8
(22) Anmeldetag: 10.02.1996
(51) Int. Cl.: H02G 3/12, H02G 3/14

(54) **Unterputzdose für elektrische Anschlüsse**

(30) Priorität: 14.02.1995 CH 428/95
(71) Anmelder: AGRO AG, CH-5502 Hunzenschwil (CH)
(72) Erfinder: Hablützel, Richard, CH-8903 Birmensdorf (CH)
(74) Vertreter: Fillinger, Peter, Dr.

(57) **Zusammenfassung**

Die Unterputzdose (1) und der Deckel (2) sind durch eine trennbare Verbindung (10) miteinander verbunden. Diese trennbare Verbindung (10) ist eine Schwenkverbindung, derart, dass der Deckel (2) in einer Schwenklage die offene Dosenseite abschliesst und in einer anderen Schwenklage frei gibt.

## Beschreibung

Die vorliegende Erfindung bezieht sich auf eine Unterputzdose gemäss dem Oberbegriff des Anspruchs 1.

In Bauwerken werden für das Anbringen elektrischer Schalter, Steckdosen, Lampen, und dgl. Apparate oder für Verzweigungen an den hierfür vorgesehenen Stellen Unterputzdosen wie Einlasskasten, Deckendübel oder Unterputzabzweigdosen, und dgl. versenkt im Mauerwerk befestigt und gegebenenfalls später die Apparate daran festgeschraubt. Der Einbau der Unterputzdosen in eine Mauer oder in eine Decke erfolgt vor dem Anbringen des Verputzes. Beim Anbringen des Verputzes werden daher die ins Rohmauerwerk montierten Unterputzdosen vom Putzmörtel oder Gips überdeckt und, wenn keine Vorkehren getroffen wurden, mit Verputzmasse ausgefüllt. Um ein Eindringen von Verputzmasse in die Unterputzdose zu vermeiden, wird sie in der Regel vom Monteur mit Altpapier vollgestopft, das dann bei der Montage eines Apparates mit der die Unterputzdose überdeckenden Verputzschicht wieder entfernt wird. Da sich hierfür auf Baustellen immer weniger Papierabfälle finden lassen, werden die Unterputzdosen von den Monteuren oft ungenügend gegen das Eindringen von Verputzmasse geschützt, was bei der späteren Apparatemontage zu einem unerwünschten Arbeitsaufwand für die Freilegung und Reinigung der Unterputzdose führt.

Zur Beseitigung dieses Nachteils sind Unterputzdosen mit einem auf der Vorderseite auf- oder einsetzbaren Deckel bekannt geworden, die nach dem Anbringen des Putzes leicht entfernbar sind und die das Innere der Unterputzdosen gut gegen eine Verschmutzung schützen.

Diese bekannte Lösung hat für den Grosshändler wie auch für den Elektroinstallateur den Nachteil, dass für jede Art von Unterputzdosen zusätzlich passende Schutzdeckel am Lager zu halten, zu bestellen und zu liefern sind, woraus die Gefahr resultiert, dass der Monteur am Einbauort zwar die Unterputzdosen, nicht aber die Schutzdeckel bei sich hat und sie in der vorerwähnten Weise mit einem improvisierten aber ungenügenden Schutz versieht.

Die vorliegende Erfindung stellt sich daher die Aufgabe, eine Unterputzdose der eingangs genannten Art derart zu verbessern, dass die erwähnten Nachteile vermieden werden.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:

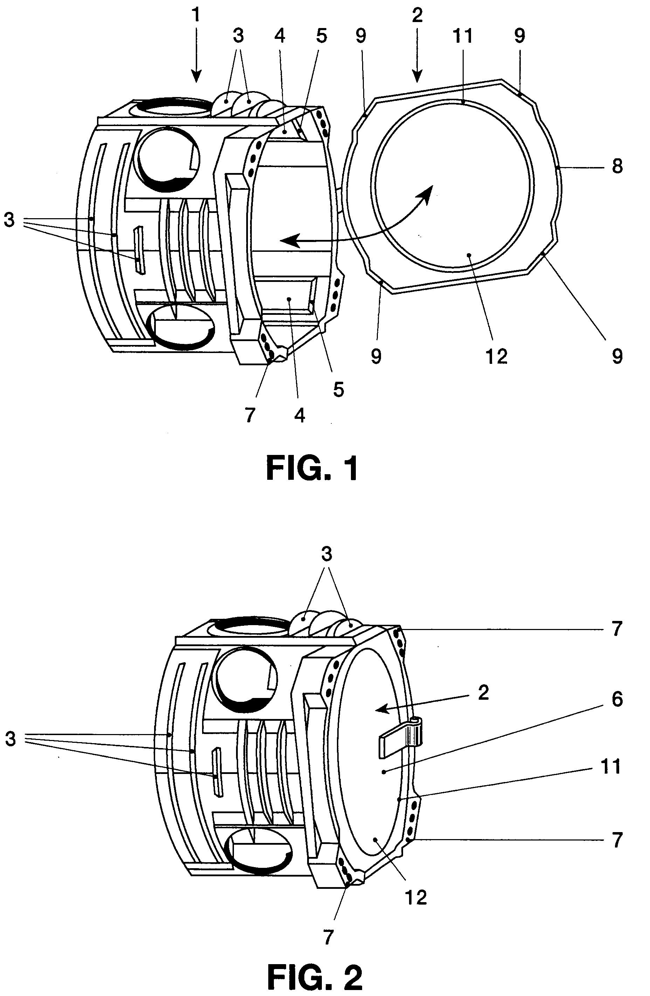

- Fig. 1: eine perspektivische Darstellung einer Unterputzdose in Form eines Einlasskastens mit offenem Schutzdeckel,
- Fig. 2: eine gleiche Darstellung wie Fig. 1 mit geschlossenem Schutzdeckel,

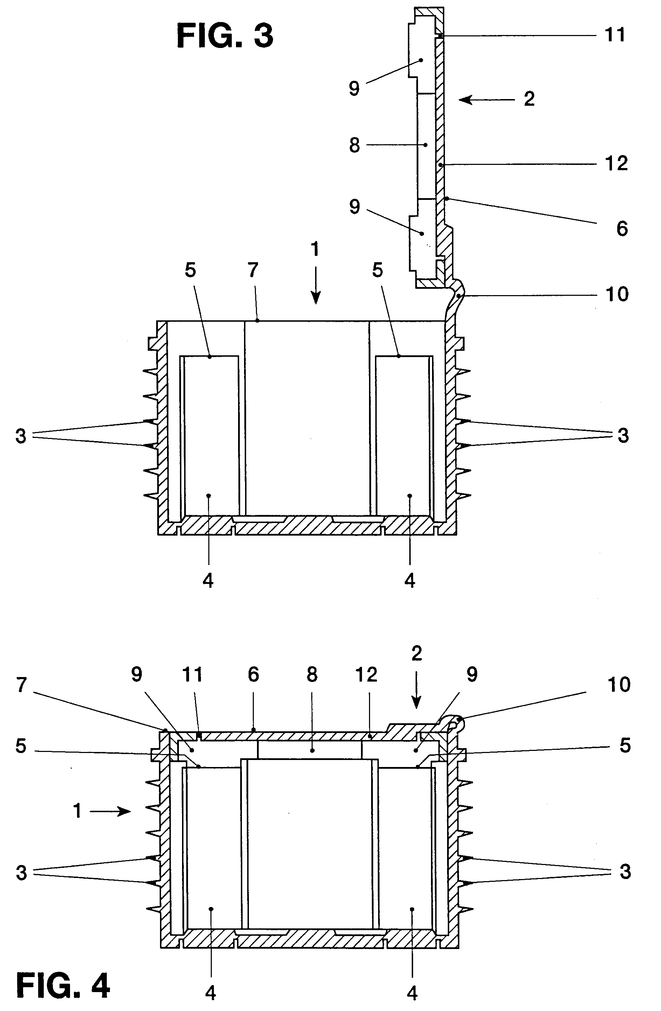

- Fig. 3: einen Horizontalschnitt durch den Einlasskasten nach Fig. 1 und
- Fig. 4: einen Horizontalschnitt durch den Einlasskasten nach Fig. 2.

Die Zeichnung zeigt als Unterputzdose einen Einlasskasten 1 für das Anbringen eines Schalters oder einer Steckdose, dem ein Schutzdeckel 2 zugeordnet ist. Der aus Kunststoff gefertigte Einlasskasten 1 ist aussenseitig mit elastisch verformbaren Haltelamellen 3 versehen mit denen er in einer entsprechenden Wand- oder Deckenöffnung form- und/oder reibschlüssig befestigbar ist. In der Kastenwand sind Durchbrechungen für das Einführen von Isolierrohren vorhanden, die bei Nichtgebrauch durch einen eindrückbaren, von einer Sollrissrille begrenzten Wandabschnitt verschlossen sind. An der Kasteninnseite sind symmetrisch verteilt vier flache Rippen 4 ausgeformt, die gegen die offene Frontseite je eine Anschlagfläche 5 bilden und den Einschub des Deckels 2 derart begrenzen, dass dessen Aussenseite 6 im vollständig eingeschobenen Zustand koplanar zur Montagefläche 7 des Einlasskastens liegt.

Der Schutzdeckel 2 weist eine zum Kasteninneren weisende, umlaufende Randrippe 8 auf. Bei geschlossenem Deckel 2 liegt deren Aussenseite gegen die Kasteninnenseite auf, so dass das Kasteninnere gegen das Eindringen von Verputzmasse geschützt und die offene Kastenseite formstabil versteift ist. Zur Versteifung der offenen Kastenseite kann der Deckel 2 zusätzlich mit nicht dargestellten Versteifungsrippen oder dgl. versehen sein. Zur Sicherung einer mit der offenen Kastenseite bündigen Lage des Deckels 2 ist dessen Randrippe 8 mit vier symmetrisch angeordneten Vorsprüngen 9 versehen, deren freies Ende beim Einschieben des Deckels in den Einlasskasten 1 auf die entsprechende Aufschlagfläche 5 auftreffen und den Einschubweg 9 begrenzen. Die Länge der Vorsprünge 9 entspricht dem Abstand der Montagefläche 7 von der Anschlagfläche 5.

Durch eine bewegliche, trennbare Verbindung 10 ist der Schutzdeckel 2 unverlierbar mit dem Einlasskasten 1 verbunden. Diese Verbindung 10 kann ein Scharnier, vorzugsweise ein Filmscharnier, eine Verbindungslasche oder ein Steckscharnier mit Schwenkachse oder Kugelkopf sein. Vorzugsweise sind der Schliesskasten 1 der Schutzdeckel 2 und die Verbindung 10 einstückig und aus dem gleichen, vorzugsweise aber unterschiedlich eingefärbten Kunststoffmaterial gefertigt, so dass der Schutzdeckel 2 mit der Verbindung 10 vor der Montage eines Apparates mit einem Messer weggeschnitten werden kann.

Für das Montieren eines Apparates wird vorerst die den Schutzdeckel 2 überdeckende Verputzschicht entfernt. Danach wird der Schutzdeckel 2 ausgeschwenkt und mitsamt der Verbindung 10 abgeschnitten. Zur Erleichterung des Ausschwenkens des Schutzdeckels 2 ist dieser mit einer kreisförmigen Einreissrille 11 versehen, die einen kreisscheibenförmigen Abschnitt 12 begrenzt. Nach dem Eindrücken des Abschnitts 12 ist die im Einlasskasten 1 verbleibende Randpartie des Schutzdeckels 2 leicht mit den Fingern oder mit einem Werkzeug erfassbar und kann, gegebenenfalls unter elastischer Verformung aus dem Einlasskasten 1 herausgezogen bzw. geschwenkt werden.

Obwohl vorausgehend die Erfindung nur anhand eines einfachen Einlasskastens beschrieben wurde, ist sie in gleicher Weise bei Mehrfacheinlasskasten, Unterputzabzweigdosen, Deckendübeln und dgl. anwendbar.

## Patentansprüche

1. Unterputzdose (1) mit einem Deckel (2) zum Verschliessen der offenen Dosenseite, dadurch gekennzeichnet, dass die Unterputzdose (1) und der Deckel (2) durch eine trennbare Verbindung (10) miteinander verbunden sind, dass die trennbare Verbindung (10) eine Schwenkverbindung ist, derart, dass der Deckel (2) in einer Schwenklage die offene Dosenseite abschliesst und in einer anderen Schwenklage frei gibt.

2. Unterputzdose nach Anspruch 1, dadurch gekennzeichnet, dass die Unterputzdose (1), der Deckel (2) und die trennbare Verbindung (10) einstückig und vorzugsweise aus einem Kunststoff gefertigt sind.

3. Unterputzdose nach Anspruch 1 oder 2, dadurch gekennzeichnet, dass die trennbare Verbindung (10) durch ein Filmscharnier oder eine Verbindungslasche gebildet wird.

4. Unterputzdose nach einem der Ansprüche 1 bis 3, dadurch gekennzeichnet, dass der Deckel (21) einen eindrück- oder einreissbaren Abschnitt (12) aufweist.

5. Unterputzdose nach einem der Ansprüche 1 bis 4, dadurch gekennzeichnet, dass innenseitig an der Unterputzdose (1) und am Deckel (2) komplementäre Anschläge (5, 9) vorhanden sind, die bei geschlossenem Deckel (2) die Deckellage bestimmen, derart, dass die Deckelaussenseite koplanar zur Montagefläche (7) der Unterputzdose (1) orientiert ist.

6. Unterputzdose nach einem der vorangehenden Ansprüche, dadurch gekennzeichnet, dass sie als Einlasskasten, Deckendübel oder Unterputzabzweigdose ausgebildet ist.
